# EUROPÄISCHE PATENTSCHRIFT

(11) **EP 1 325 843 B1**
(45) Veröffentlichungstag und Bekanntmachung des Hinweises auf die Patenterteilung: **12.10.2005**
(21) Anmeldenummer: 02028388.3
(22) Anmeldetag: 18.12.2002
(51) Int. Cl.: B60R 11/02, H04M 1/04

(54) **Halterung für ein elektronisches Gerät**
Holder for an electronic device
Système de support pour un dispositif électronique

(30) Priorität: 19.12.2001 DE 10162805
(43) Veröffentlichungstag der Anmeldung: 09.07.2003
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Eisele, Otten, Roth & Dobler

(56) Entgegenhaltungen:
- EP-A- 0 887 233
- US-A- 2 579 878
- PATENT ABSTRACTS OF JAPAN vol. 1999, no. 04, 30. April 1999 (1999-04-30) -& JP 11 011224 A (KOJIMA PRESS CO LTD), 19. Januar 1999 (1999-01-19)

## Beschreibung

Die Erfindung betrifft eine Halterung für ein elektronisches Gerät nach dem Oberbegriff des Anspruchs 1.

Eine derartige Halterung ist aus der EP 1 325 843 A2 bekannt. Diese Halterung dient zur vorübergehenden Befestigung eines elektronischen Gerätes und weist wenigstens zwei seitlich dem elektronischen Gerät zugeordnete Klemmbacken auf, welche dieses zwischen sich einklemmen, wobei wenigstens eine der Klemmbacken an einer Oberschale der Halterung gelagert ist, welche schwenkbar oder distanzierbar mit einer Unterschale der Halterung verbunden ist, wobei die Bewegung der Klemmbacke über wenigstens einen in der Oberschale gelagerten Mitnehmer bewirkt ist, welcher während der Schwenkbewegung oder der Distanzierbewegung wenigstens zeitweise in der Unterschale der Halterung geführt ist und wobei die Klemmbacke in der Oberschale geführt ist und mit dem Mitnehmer gekuppelt ist. Nachteilig am Stand der Technik ist, dass sowohl das Oberteil als auch das Unterteil der Halterung als aufwändige Bauteile ausgeführt sind, da beide Bauteile bewegliche Teile aufnehmen müssen. Dies bedeutet nicht nur die aufwändige und teuere Ausführung des Oberteils und des Unterteils, sondern auch einen erhöhten Montageaufwand, da in das Oberteil und das Unterteil zahlreiche Bauteile eingebaut werden müssen.

Der Erfindung liegt die Aufgabe zugrunde, eine Halterung für ein elektronisches Gerät zu entwickeln, welche eine Alternative zu der bekannten Vorrichtung darstellt, wobei die Halterung bezüglich der Herstellung und dem Montageaufwand einfach ausgebildet ist.

Diese Aufgabe wird ausgehend von den Merkmalen des Oberbegriffs des Anspruchs 1 erfindungsgemäß durch die kennzeichnenden Merkmale des Anspruchs 1 gelöst. Durch die in den Unteransprüchen genannten Merkmale sind vorteilhafte Ausführungen und Weiterbildungen der Erfindung möglich.

Die erfindungsgemäße Halterung besteht aus einer Oberschale und einer Unterschale, welche schwenkbar oder distanzierbar verbunden sind, wobei an der Oberschale wenigstens eine Klemmbacke gelagert ist, die über wenigstens einen in der Oberschale geführten Mitnehmer bewegbar ist, welcher durch die Schwenkbewegung oder die Distanzierbewegung wenigstens zeitweise in der Unterschale der Halterung zwangsgeführt ist. Durch eine derartige Kopplung der Bewegung der Klemmbacke mit der Bewegung des Mitnehmers, welche durch ein Aufklappen und Zuklappen bzw. Hochfahren und Niederfahren der Oberschale im Bezug zur Unterschale bewirkt ist, erfolgt die Bewegung der Backe durch eine einfache auf die Oberschale ausgeübte Bewegung. Dies bringt den Vorteil, dass kein umständliches Zusammendrücken bzw. Andrücken von Backen an ein elektronisches Geräte mehr erforderlich ist. Vielmehr ist es möglich, das elektronische Gerät auf die Oberschale der Halterung zu legen und die Oberschale direkt mit dem elektronischen Gerät auf die Unterschale niederzudrücken und hierdurch über das Zusammenwirken von Mitnehmer und Klemmbacke eine Klemmung des elektronischen Geräts herbei zu führen. Somit erfolgt eine indirekte Betätigung der Klemmbacke über umgelenkte Bewegungen. Dies bringt weiterhin den Vorteil, dass seitlich der in der Freigabeposition stehenden Klemmbacke kein Raum für das seitliche Greifen bzw. Betätigen der Klemmbacke erforderlich ist, da die Bewegung der Klemmbacke durch eine Druckbewegung auf die Oberschale der Halterung erzeugt wird.

Weiterhin sieht die Erfindung vor, in der Oberschale zwischen dem Mitnehmer und der Klemmbacke ein Übertragungselement, insbesondere eine Feder oder ein Gummi, anzuordnen, das eine belastungsabhängige, bedingte Bewegung der Klemmbacke durch den Mitnehmer aus einer ersten Position, in welcher die Klemmbacke keinen Druck auf ein Mobiltelefon ausübt, in eine zweite Position, in welcher die Klemmbacke Druck auf das Mobiltelefon ausübt, bewirkt. Durch diese bereichsweise, belastungsabhängige Entkopplung der Bewegung der Klemmbacke von der Bewegung des Mitnehmers passt sich die Halterung automatisch auf Mobiltelefone unterschiedlicher Breite an, da die Bewegung der Klemmbacke von der Bewegung des Mitnehmers abgekuppelt wird, wenn die auf die Klemmbacke wirkende Widerstandskraft die Widerstandskraft des Übertragungselements, beispielsweise der Druckfeder, übersteigt. Durch die bei einem Verharren der Klemmbacke und einem Weiterbewegen des Mitnehmers erfolgende Spannung des Übertragungselements wird eine wachsende Klemmkraft auf das Mobiltelefon aufgebracht, welche durch das Übertragungselement erzeugt ist. Dies bringt den großen Vorteil, dass der Nutzer nicht genötigt ist, die erforderliche Klemmkraft selbst zu ermitteln und durch ein entsprechend kräftiges Drücken der Klemmbacke zu bewirken. Vielmehr stellt sich bei der erfindungsgemäßen Anordnung die nötige Klemmkraft automatisch ein.

Weiterhin sieht die Erfindung vor, die Klemmbacke durch wenigstens ein Federelement in eine Freigabeposition zu drücken, wobei unter Freigabeposition diejenige Position zu verstehen ist, in der die Klemmbacke ohne Vorspannung in der angehobenen Position der Oberschale steht. Durch derartige Federelemente wird ein automatisches Zurückfahren der Klemmbacke in die Freigabeposition erreicht.

Erfindungsgemäß ist es vorgesehen das Federelement insbesondere als Feder oder Gummi ausgebildet ist. Hierdurch ist eine kostengünstige Ausführung der Halterung möglich.

Weiterhin sieht die Erfindung vor, das Federelement zwischen gegenüberliegenden Klemmbacken anzuordnen. Dies hat bei einer Halterung mit zwei gegenüberliegenden, beweglichen Klemmbacken den Vorteil, dass eine zwischen den Klemmbacken angeordnete Feder ausreicht, um zwei Klemmbacken in die Freigabeposition zu drücken.

Erfindungsgemäß ist es weiterhin vorgesehen, das Übertragungselement stärker zu dimensionieren als das Federelement. Hierdurch ist sichergestellt, dass bei geringem oder nicht vorhandenem Widerstand, der auf die sich in die Klemmposition bewegenden Backe wirkt, immer eine Mitnahme der Klemmbacke durch den Schieber erfolgt und ein Stehenbleiben der Klemmbacke nur dann durch eine Verformung des Übertragungselements möglich ist, wenn der Klemmbacke ein größerer Widerstand, beispielsweise der Widerstand eines Mobiltelefons, entgegen wirkt.

Eine Ausführungsvariante des Erfindungsgegenstandes sieht vor, am Kopf des Mitnehmers Finger auszubilden, welche in Führungsschlitze des Schiebers eingreifen. Hierdurch ist eine Verteilung der zwischen Schieber und Mitnehmer wirkenden Kräfte erreicht. Weiterhin kann hierdurch ein Verkanten des Schiebers bei einer außermittiger Belastung des Flügels der Klemmbacke vermieden werden.

Schließlich sieht die Erfindung vor, die Oberschale in der auf die Unterschale niedergedrückten Position, der Klemmposition, durch einen Beschlag zu halten, der bei einmaligem Zusammendrücken eine Rastverbindung herstellt und bei nochmaligem Zusammendrücken die Rastverbindung wieder löst. Alternativ ist hier auch an ein Zusammenhalten von Oberschale und Unterschale mittels Dauermagneten oder durch einen Elektromagnet gedacht.

Ergänzend sieht die Erfindung vor, der Halterung eine Auflage zuzuordnen, über welche die Halterung lösbar und formschlüssig positioniert ist, wobei insbesondere eine elektrische Kontaktierung zwischen der Halterung und der Auflage in gekuppeltem Zustand möglich ist. Hierdurch ist es möglich die Halterung auf einfachste Weise zu befestigen. Ein derartiger Befestigungs- bzw. Entkupplungsvorgang lässt sich durch eine L-förmige Aufsetz- und Aufschiebebewegung bzw. Abzieh- und Abhebbewegung einfach realisieren. Durch die ausschließliche Befestigung der Halterung an der Auflage ist in einem freihängenden Bereich ein einfaches Greifen der Halterung möglich, so dass diese leicht an der Auflage befestigt bzw. von dieser abgenommen werden kann.

Weitere Einzelheiten der Erfindung werden in der Zeichnung anhand von schematisch dargestellten Ausführungsbeispielen beschrieben.

Hierbei zeigt:
- Figur 1: eine erste Variante einer erfindungsgemäßen Halterung in Seitenansicht in Freigabestellung,
- Figur 2: eine Draufsicht auf die in Figur 1 dargestellte Halterung,
- Figur 3: eine Seitenansicht der in den Figuren 1 und 2 gezeigte Halterung in Klemmstellung,
- Figur 4: eine Draufsicht auf die in Figur 3 dargestellte Halterung,
- Figur 5: eine Seitenansicht der in Figur 4 dargestellten Halterung aus einer Pfeilrichtung V,
- Figur 6: eine perspektivische Ansicht eines Mobiltelefons,
- Figur 7: eine Seitenansicht der in Figur 1 bis 5 dargestellten Halterung in Freigabestellung, wobei die Halterung keinen Steckerhalter aufweist,
- Figur 8: eine Draufsicht auf die in Figur 7 dargestellte Halterung bei abgenommener Blende,
- Figur 9: einen Schnitt durch Figur 7 entlang der Schnittlinie IX-IX bei abgenommener Blende,
- Figur 10: eine Seitenansicht der in der Figur 7 dargestellten Halterung in Klemmstellung,
- Figur 11: eine Draufsicht auf die in Figur 10 dargestellte Halterung bei abgenommener Blende,
- Figur 12: einen Schnitt durch die in Figur 10 dargestellte Halterung entlang der Schnittlinie XII-XII bei abgenommener Blende,
- Figur 13: eine schematischer Darstellung der in den Figuren 1 bis 5 und 7 bis 12 gezeigten Klemmbackenmechanik und
- Figur 14: eine vereinfachte Darstellung einer Halterung mit einem Oberteil, das vom Unterteil parallel distanzierbar ist,
- Figur 15: eine weitere Seitenansicht der in Figur 1 dargestellten Halterung mit einer Auflage.

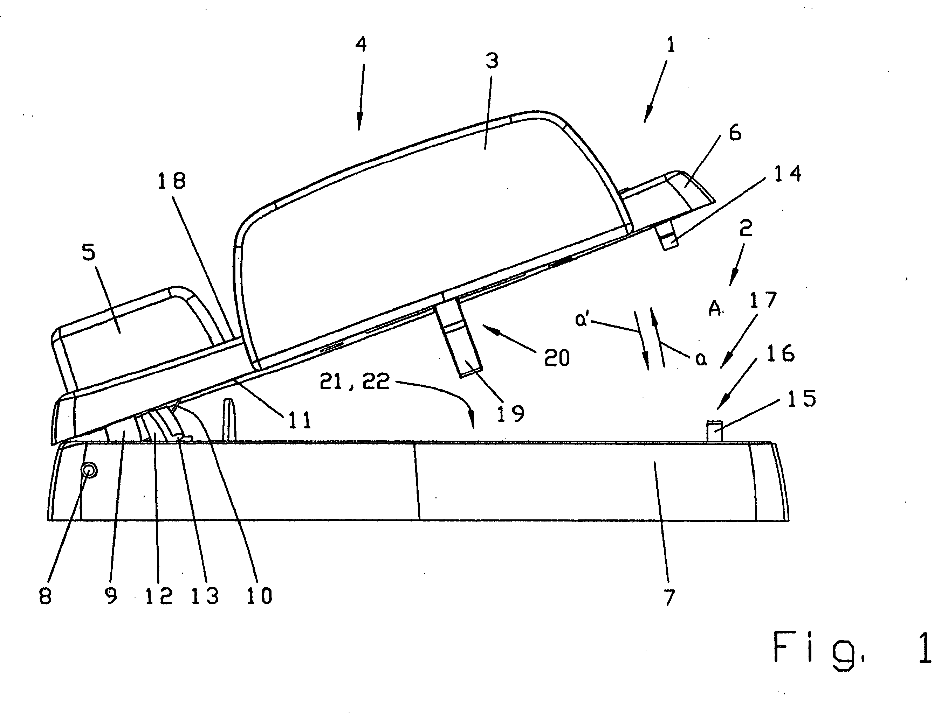

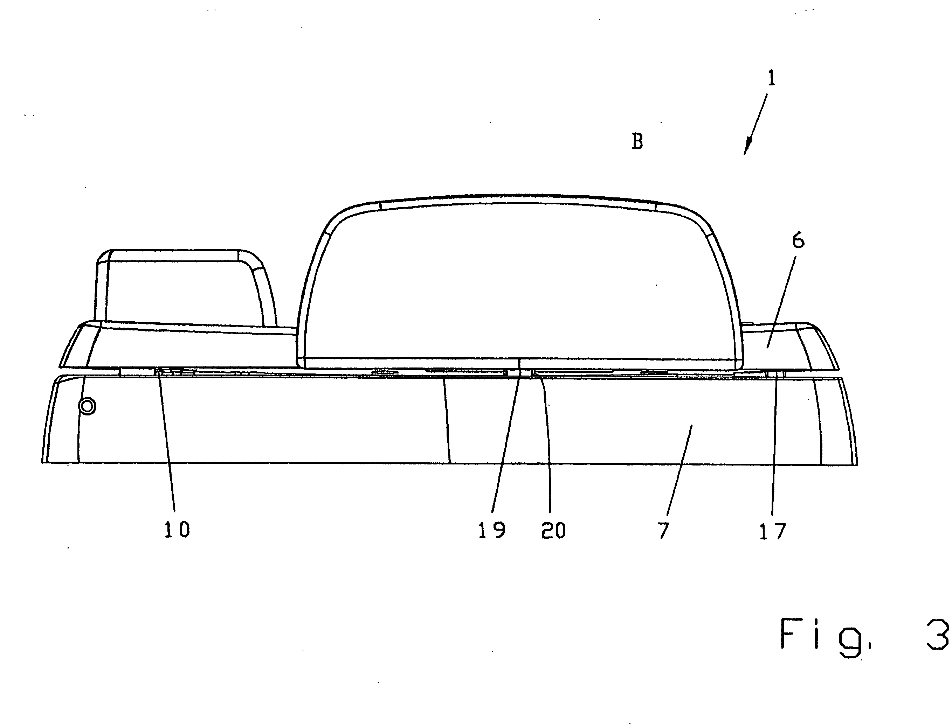

In Figur 1 ist eine erste Variante einer Halterung 1 in Seitenansicht dargestellt. Die Halterung 1 besteht im Wesentlichen aus einem Gehäuse 2, zwei Klemmbacken 3, 4 und einem Steckerhalter 5. Das Gehäuse 2 setzt sich aus einer Oberschale 6 und einer Unterschale 7 zusammen. Die Schalen 6, 7 sind über eine Drehachse 8 drehbar miteinander verbunden, wobei die Oberschale 6 mittels eines Arms 9 an der in der Unterschale 7 gelagerte Drehachse 8 angelenkt ist. Ein Abheben der Oberschale 6 von der Unterschale 7 in eine Pfeilrichtung a bis in die in Figur 1 dargestellte Freigabeposition A ist durch eine Blattfeder 10 bewirkt. Diese ist an der Drehachse 8 gelagert und drückt gegen eine Unterseite 11 der Oberschale 6. Weiterhin ist an der Oberschale 6 noch ein Arm 12 ausgebildet, welcher über Zähne 13 mit einer nicht näher dargestellten Bremse zusammenwirkt. Diese Bremse ist in der Unterschale 7 angeordnet und besteht im Wesentlichen aus einem drehbar gelagerten Zahnrad, auf dessen Achse ein Federelement wirkt. Die Bremse unterstützt eine Öffnungsbewegung in die Pfeilrichtung a und wirkt in eine Pfeilrichtung a' bremsend. In einem dem Arm 9 gegenüberliegenden Bereich der Oberschale 6 ist eine pilzzapfenförmige Nase 14 angeordnet, die in einer Klemmposition B der Halterung 1 (siehe Figur 3) mit einer Rastnasen 15 aufweisenden Fixierung 16 zusammenwirkt. Die Bauteile 14, 15, 16 bilden zusammen einen Beschlag 17, welcher als sogenannter Push-Push-Beschlag ausgeführt ist. Unter einem Push-Push-Beschlag ist ein Beschlag zu verstehen, welcher beim Eindrücken der Nase 14 in die Fixierung 16 zu einem Verhaken der Nase 14 mit den Rastnasen 15 führt, so dass die Nase 14 durch die Rastnasen 15 gehalten ist. Diese Haltestellung kann durch ein anschließendes Eindrücken der Nase 14 in die Fixierung 16 wieder gelöst werden. Charakteristisch für diesen Push-Push-Beschlag ist somit, dass die gleiche Bewegung einmal zum Arretieren und einmal zum Lösen der Bauteile dient. Auf einer Oberseite 18, der Oberschale 6 ist der Steckerhalter 5 angeordnet. Dieser dient dazu, einen nicht dargestellten Kontaktstecker, welcher mit einer Schnittstelle eines nicht dargestellten Mobiltelefons zusammenwirkt, dauerhaft oder vorübergehend an der Halterung 1 zu fixieren. Die Klemmbacken 3, 4 stehen in Verbindung mit Mitnehmern 19, 20, welche aus der Unterseite 11 der Oberschale 6 in Richtung der Unterschale 7 herausragen. Die Mitnehmer 19, 20 tauchen bei einer Bewegung in die Pfeilrichtung a' in Ausnehmungen 21, 22 in der Unterschale 7 ein.

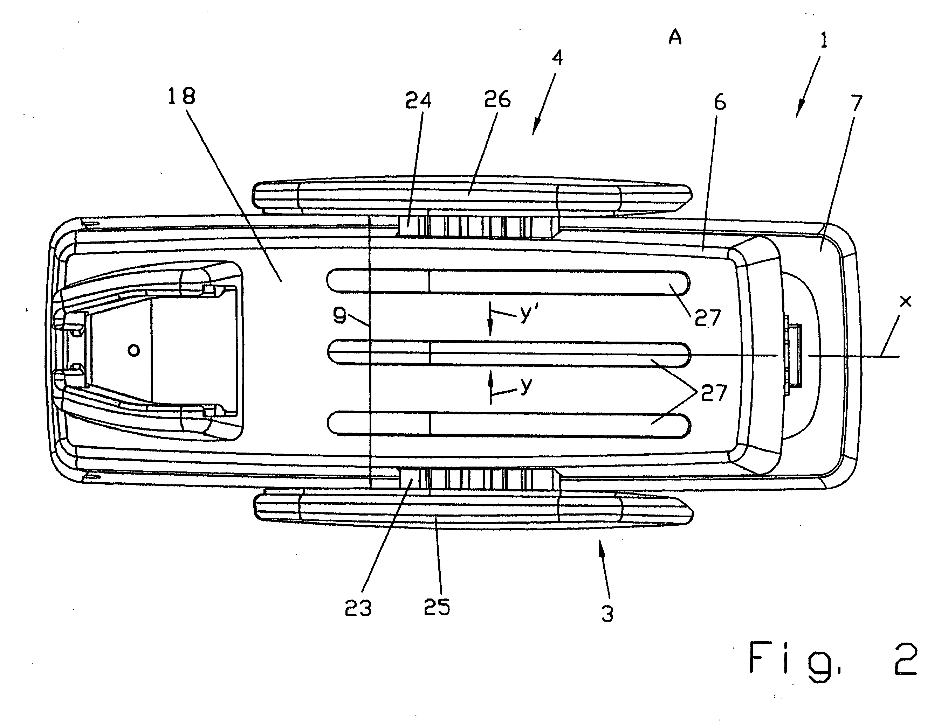

In Figur 2 ist eine Draufsicht auf die in Figur 1 dargestellte Halterung 1 abgebildet. In der dort abgebildeten Freigabestellung A weisen die Klemmbacken 3, 4 einen Abstand g zueinander auf. Anders ausgedrückt, der Abstand der Klemmbacken 3, 4 von einer Längsmittelachse x der Halterung 1 ist in der Freigabestellung maximal (= g/2). Die Klemmbacken 3, 4 weisen im Wesentlichen einen L-förmigen Querschnitt auf. Sie bestehen somit aus Schiebern 23, 24 und Flügeln 25, 26, wobei die Flügel 25, 26 etwa senkrecht zu den Schiebern 23, 24 stehen. Mit den Schiebern 23, 24 sind die Klemmbacken 3, 4 in Pfeilrichtungen y bzw. y' aus der in Figur 2 dargestellten Stellung in Richtung der Längsmittelachse x verfahrbar. Auf der Oberseite 18 der Oberschale 6 sind drei in Richtung der Längsmittelachse x verlaufende Rinnen 27 angeordnet. Diese sind für die Einlage von rutschhemmendem, polsterndem Material vorgesehen, um ein nicht dargestelltes Mobiltelefon schonend und verschiebesicher mit der Oberschale 6 in Kontakt zu bringen.

In Figur 3 ist die in den Figuren 1 und 2 dargestellte Halterung in einer geschlossenen Position bzw. in einer Klemmposition B dargestellt. In der Klemmposition B liegt die Oberschale 6 vollständig auf der Unterschale 7 auf und wird auf diese gegen die von der Blattfeder 10 und der nicht dargestellten Bremse ausgeübten Kräfte durch den Beschlag 17 gehalten. In der Klemmposition B sind die Mitnehmer 19, 20 annähernd vollständig in die Unterschale 7 eingetaucht.

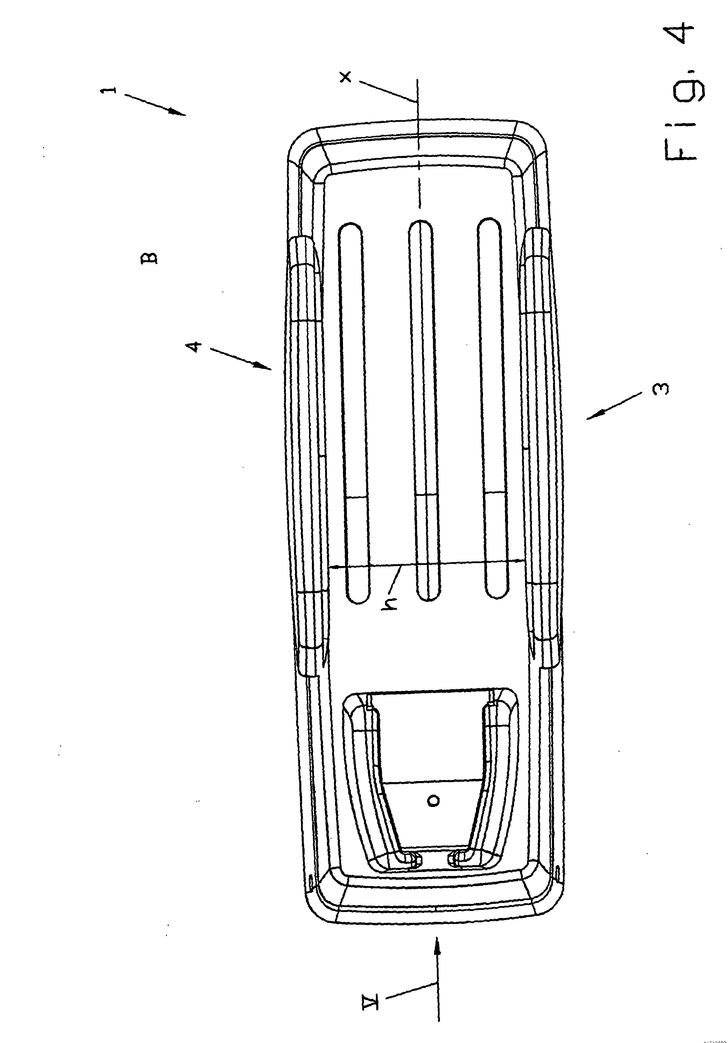

Figur 4 zeigt eine Draufsicht auf die in Figur 3 dargestellte Halterung 1. In der hier wiederum dargestellten Klemmstellung B weisen die Klemmbacken 3, 4 einen Abstand h voneinander auf. Der Abstand h der Klemmbacken 3, 4 in der Klemmposition B ist kleiner als der in Figur 2 dargestellte Abstand g der Klemmbacken in der Freigabeposition A. Folglich hat sich auch der Abstand der Klemmbacken 3, 4 zur Längsmittelachse x verringert und beträgt nun h/2.

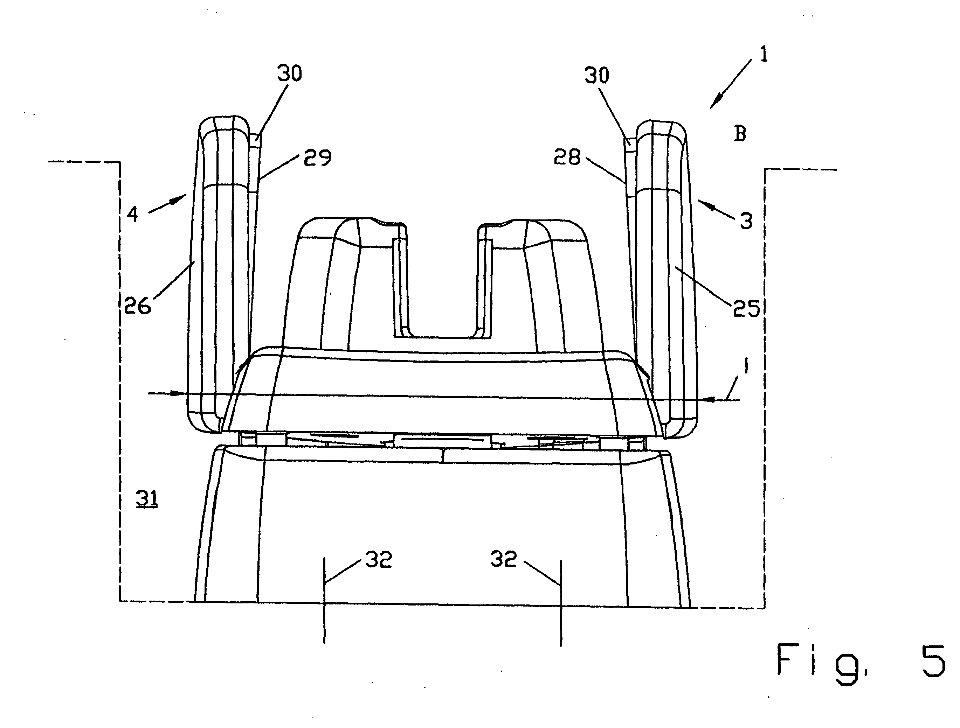

Figur 5 zeigt eine Seitenansicht der in Figur 4 dargestellten Halterung 1 aus einer Pfeilrichtung 5. Die Flügel 25, 26 der Klemmbacken 3, 4 weisen an Innenseiten 28, 29 Polsterungen 30 auf, welche zu einer schonenden Einklemmung eines nicht dargestellten Mobiltelefons dienen. In der Klemmposition B weist die Halterung 1 etwa eine einheitliche Breite i auf. Durch gestrichelte Linien ist ein Einbauschacht 31 angedeutet, welcher für die Aufnahme der Halterung 1 vorgesehen sein kann. In einem derartigen Einbauschacht 31 ist die Halterung 1 beispielsweise durch symbolisch dargestellte Verschraubungen 32 befestigt.

Die in den Figuren 1 bis 5 dargestellte Halterung ist dafür vorgesehen Mobiltelefone zu halten, welche über ein nicht dargestelltes Kabel mit einem nicht dargestellten Stecker an beispielsweise eine in einem Fahrzeug vorhandene Freisprecheinrichtung angeschlossen sind. Hierbei ist es vorgesehen, den Stecker im Steckerhalter 5 zu befestigen und das Mobiltelefon mit diesen zu verbinden. Der Stecker kann auf diese Weise dauerhaft an der Halterung befestigt sein, während das Mobiltelefon beliebig entnommen werden kann.

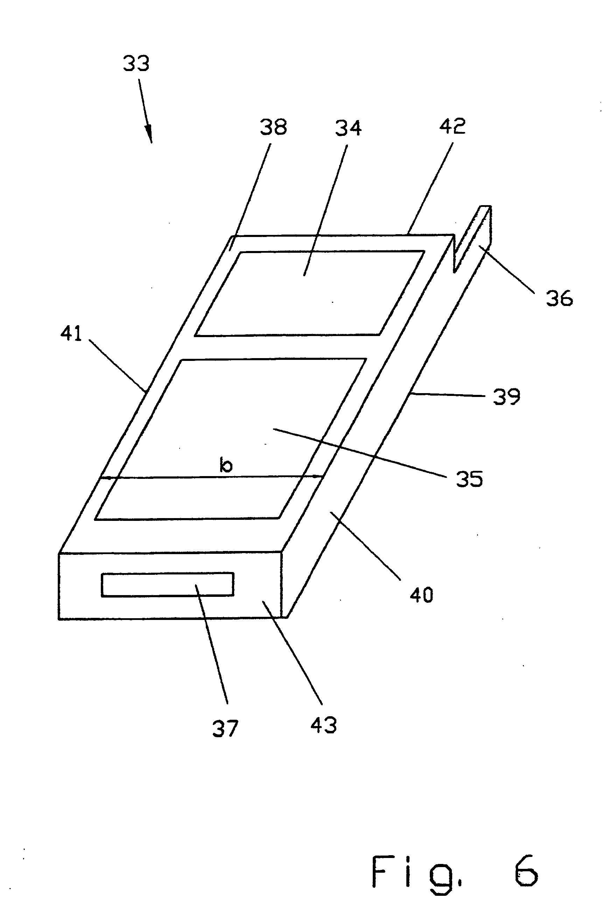

In Figur 6 ist ein Mobiltelefon 33 in perspektivischer Ansicht dargestellt. Das Mobiltelefon 33 besitzt ein Display 34, ein Tastaturfeld 35, eine Antenne 36 und eine Schnittstelle 37 zum Anschluss eines Steckers. Das Display 34 und das Tastaturfeld 35 sind auf einer Vorderseite 38 angeordnet. Dieser liegt eine Rückseite 39 gegenüber. Seitlich ist das Mobiltelefon 33 durch Seitenflächen 40, 41 begrenzt. Die Antenne 36 und die Schnittstelle 37 sind an Seitenflächen 42, 43 angeordnet. Das Mobiltelefon weist eine Breite b auf.

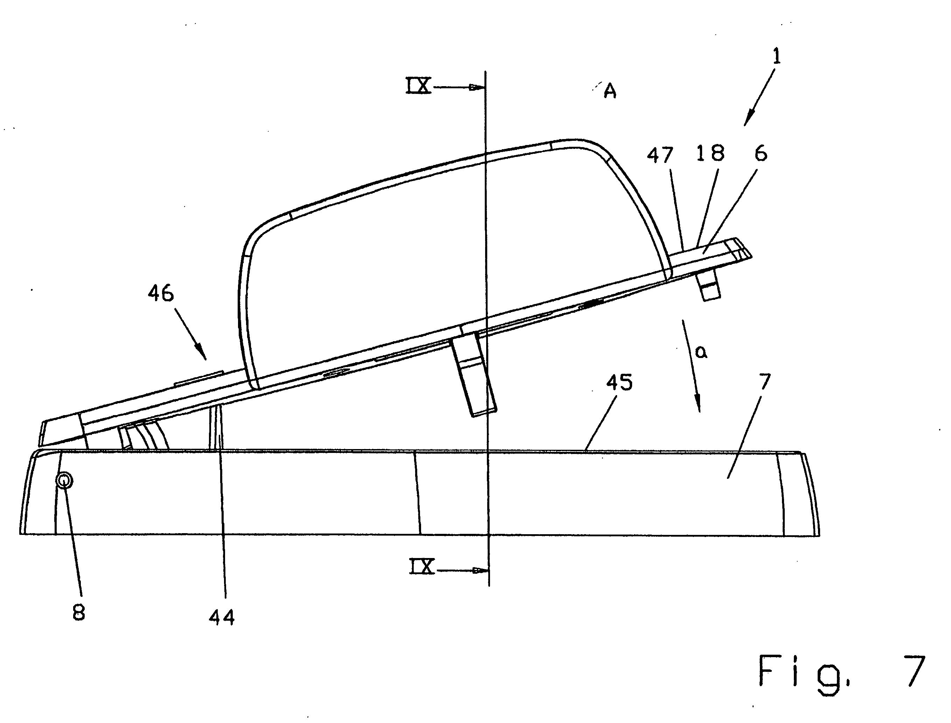

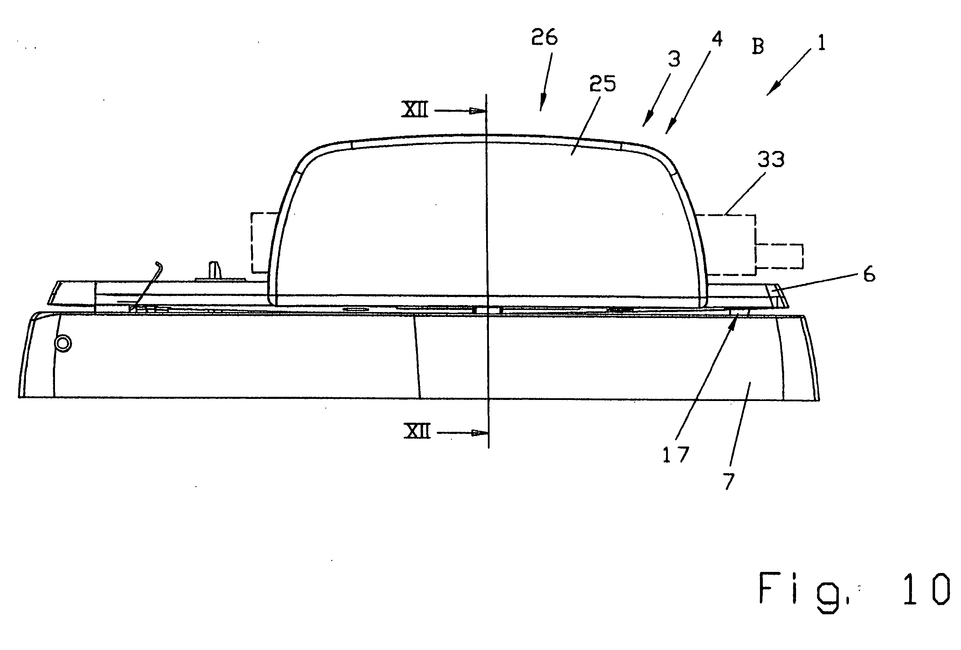

Figur 7 zeigt die aus den Figuren 1 bis 5 bekannte Halterung 1 in Seitenansicht. Die Halterung 1 ist in der Freigabeposition A dargestellt und weist keinen Steckerhalter auf. Die in den Figuren 7 bis 12 dargestellte Halterung ist für die Befestigung von Mobiltelefonen vorgesehen, welche über eine Funkverbindung, beispielsweise eine Infrarotverbindung oder eine Bluetooth-Verbindung, mit beispielsweise einer im Fahrzeug angeordneten Freisprecheinrichtung verbunden sind. Hinsichtlich der Figur 7 wird auf die Beschreibung zur Figur 1 verwiesen. Ergänzend zu Figur 1 ist noch ein Steg 44 zu erwähnen, der auf einer Oberseite 45 der Unterschal 7 angeordnet ist. Dieser taucht in eine Durchbrechung 46 in der Oberschale 6 ein und dient als Führung bzw. Zentrierung für die Bewegung, welche die Oberschale 6 relativ zur Unterschale 7 beim Übergang von der Freigabeposition A in die Klemmposition B (siehe Figur 10) bzw. von der Klemmposition B in die Freigabeposition A ausführt. Die Oberschale 6 der Halterung 1 ist auf der Oberseite 18 durch eine Blende 47 abgedeckt.

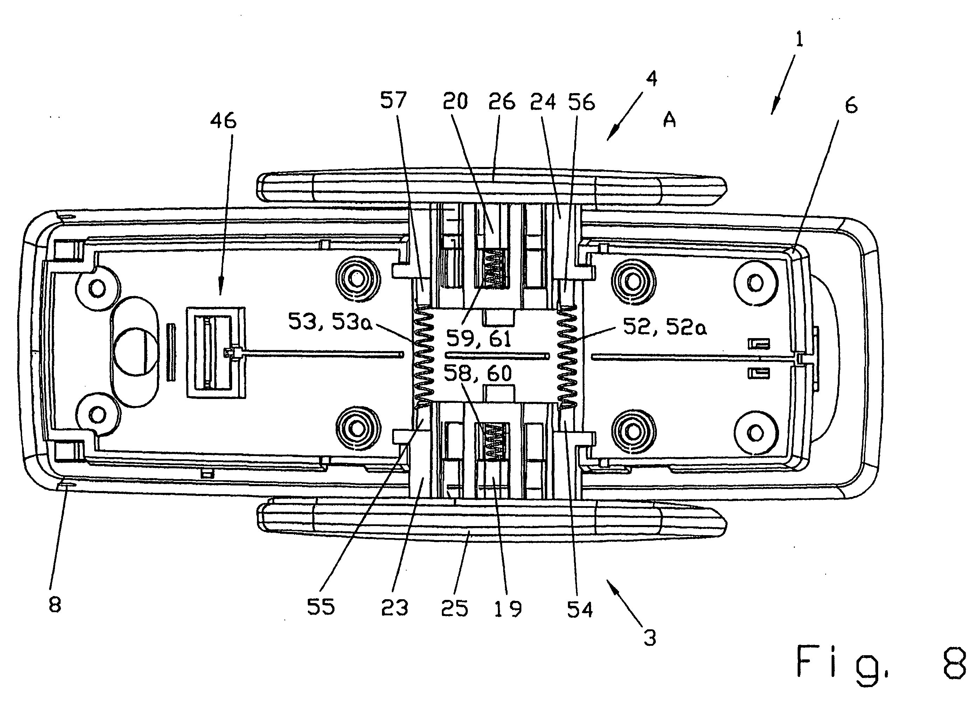

Figur 8 zeigt eine Draufsicht auf die in Figur 7 dargestellte Halterung 1, wobei hier die Blende 47 abgenommen ist und der Blick in das Innenleben der Oberschale 6 freigegeben ist. In dieser Ansicht ist auch die Durchbrechung 46 zu sehen, durch welche der Steg 44 tritt. Beim Befestigen bzw. Klemmen eines gedachten Mobiltelefons laufen nun die folgenden Bewegungen ab.

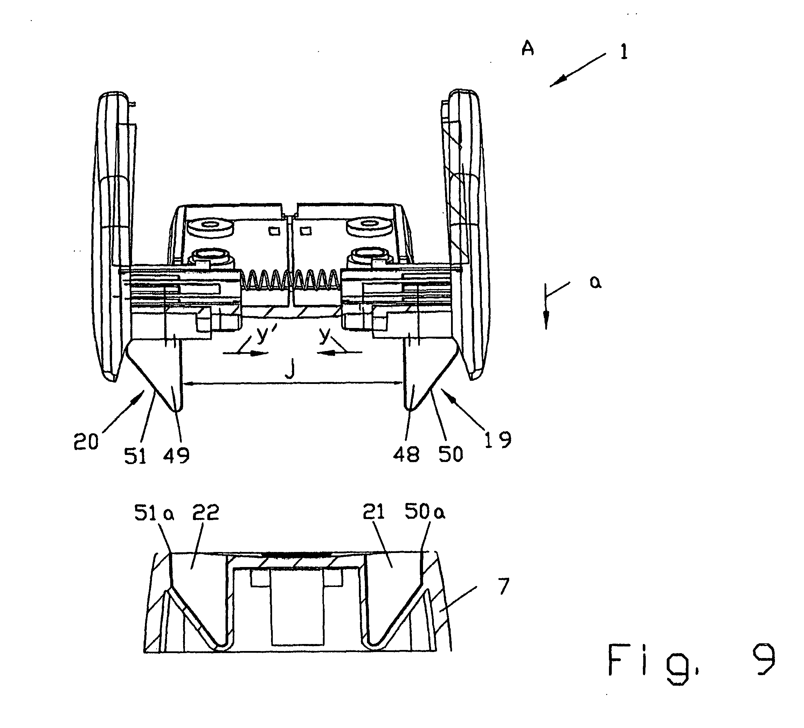

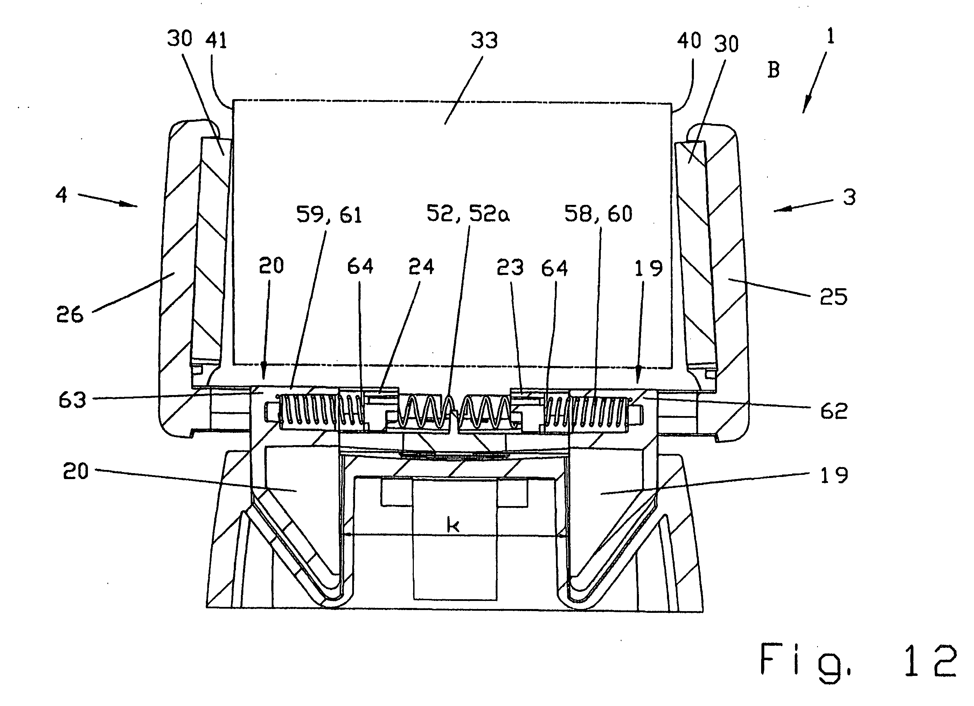

Das Mobiltelefon wird zunächst in der gewünschten Stellung zwischen den Flügeln 25, 26 der Klemmbacken 3, 4 positioniert und liegt dann auf der in Figur 8 abgenommenen Blende 47 auf. Aus dieser Lage wird das Mobiltelefon zusammen mit der Oberschale 6 in der Pfeilrichtung a (siehe Figur 7) auf die Unterschale 7 gedrückt. Der Druck kann auf das Mobiltelefon und/oder die Oberschale 6 ausgeübt werden. Durch diesen Druck wird das Mobiltelefon gemeinsam mit der Oberschale 6 in einer Schwenkbewegung um die Drehachse 8 auf die Unterschale 7 geführt. Während dieser Abwärtsbewegung tauchen die Mitnehmer 19, 20 mit Spitzen 48, 49, welche in der Freigabestellung einen Abstand j zueinander aufweisen, in die in der Unterschale 7 angeordneten Ausnehmungen 21, 22 ein (siehe Figur 9). Bei dieser in die Pfeilrichtung a gerichteten Eintauchbewegung gleiten die Mitnehmer 19, 20 mit Gleitschrägen 50, 51 an Kanten 50a, 51a der Ausnehmungen 21, 22 entlang. Bei dieser Gleitbewegung werden die Mitnehmer 19, 20 in Richtung der Pfeile y bzw. y' zusammengeschoben. In der in Figur 12 dargestellten Klemmposition weisen die Mitnehmer 19, 20 dann einen Abstand k zueinander auf. Hierbei gilt für die in den Figuren 7 bis 12 dargestellte Situation k < j.

Unabhängig vom Mobiltelefon betrachtet bewegen sich die Mitnehmer 19, 20 indirekt gegen Federelemente 52, 53, welche zwischen Nasen 54 bis 57 der Schieber 23, 24 der Klemmbacken 3, 4 angeordnet sind (siehe insbesondere Figur 8). Die Federelemente 52, 53 sind im Ausführungsbeispiel als Druckfedern 52a, 53a ausgebildet. Die Kraftübertragung zwischen den Mitnehmern 19, 20 erfolgt nur mittelbar, da die Mitnehmer 19, 20 nicht in direktem Kontakt mit den Schiebern 23, 24 der Klemmbacken 3, 4 stehen, sondern zwischen diesen Übertragungselemente 58, 59 angeordnet sind. Im Ausführungsbeispiel sind diese Übertragungselemente 58, 59 als Druckfedern 60, 61 ausgebildet. Bedingung für eine annähernd synchrone bzw. gleichlaufende Mitnahme der Klemmbacken 3, 4 durch die Mitnehmer 19, 20 ist, dass die Federelemente 52, 53 erheblich schwächer ausgelegt sind als die Übertagungselemente 58, 59. Somit erfolgt beim Übergang der Halterung 1 von der Freigabeposition A in die Klemmposition B fast ausschließlich ein Zusammendrücken der Druckfedern 52a, 53 a und lediglich ein Belasten bzw. minimales Zusammendrücken der Druckfedern 60, 61.

Bei einer Betrachtung, welche das Mobiltelefon berücksichtigt, liegt bis zu dem Zeitpunkt bzw. Schwenkgrad der Oberschale 6, zu welchem die an den Flügeln 25, 26 der Klemmbacken 3, 4 angeordneten Polster 30 Seitenflächen 40 ,41 eines vereinfacht dargestellten Mobiltelefons 33 berühren, ein vergleichbarer Bewegungsablauf vor (siehe auch Figur 12). Nach dem Auftreffen der Polster 30 auf die Seitenflächen 40, 41 ist die Mitnahme der Schieber 23, 24 nicht mehr allein durch die Druckfedern 52a, 53a, welche die Schieber 23, 24 auseinander drücken, erschwert. Zusätzlich erschwerend wirkt sich nun das Zusammenpressen der Polster 30 durch die Flügel 25, 26 gegen die Seitenflächen 40, 41 aus. Nach dem Zusammenpressen der Polster 30 stellen die Seitenflächen 40, 41 einen annähernd absoluten Widerstand gegen ein weiteres Zusammenfahren der Flügel 25, 26 der Klemmbacken 3, 4 dar. Somit übersteigt die den Schiebern 23, 24 durch das Mobiltelefon 33 entgegengesetzte Kraft die Kraft der Druckfedern 60, 61. Dies führt dazu, dass die Mitnehmer 19, 20, welche die Druckfedern 60 ,61 in Köpfen 62, 63 aufnehmen, diese gegen an den Schiebern 23, 24 angeordnete Anlageflächen 64, 65 zusammendrücken. Somit bleiben die Klemmbacken 3, 4 in ihrer jeweiligen Position stehen, auch wenn die Mitnehmer durch das Niederdrücken der Oberschale 6 bzw. des Mobiltelefons 33 noch weiter zusammengefahren werden. Durch eine derartige weitere Zusammenfahrbewegung wird dann nur noch der Druck, welchen die Flügel 25, 26 der Klemmbacken auf das Mobiltelefon 33 ausüben, erhöht. In der Klemmposition B (siehe Figur 10), in welcher das nicht dargestellte Mobiltelefon 33 durch die Flügel 25, 26 der Klemmbacken 3, 4 gehalten ist, erfolgt eine Arretierung der gesamten Halterung 1 durch den Beschlag 17.

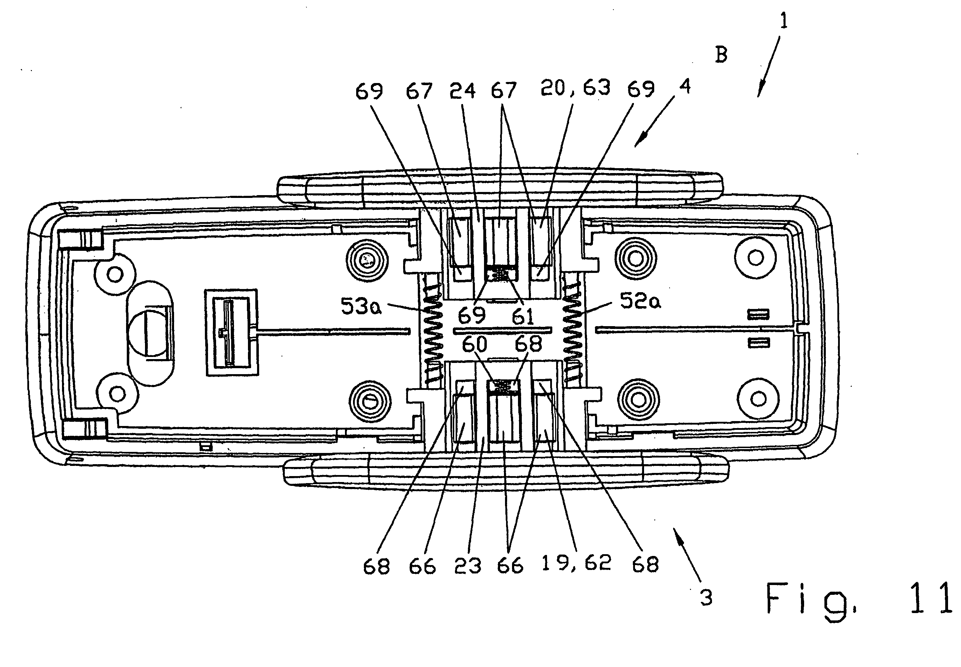

Im Vergleich der Figuren 8 und 11 (Figur 11 zeigt die Halterung 1 in der Klemmposition B, wobei das eingeklemmte Mobiltelefon nicht dargestellt ist) wird nochmals die Veränderung der Positionen der Mitnehmer 19, 20 zu den Klemmbacken 3, 4 aus der Freigabeposition A in die Klemmposition B deutlich. Die Druckfedern 60, 61 sind in der in Figur 11 gezeigten Klemmposition B gegenüber der in Figur 8 gezeigten Freigabeposition A stark komprimiert. Dies bedeutet, dass die Flügel 25, 26 mit einer durch die Druckfedern 60, 61 erzeugten Klemmkraft an den Seitenflächen des nicht dargestellten Mobiltelefons anliegen. Die Köpfe 62, 63 der Mitnehmer 19, 20 sind durch jeweils drei Finger 66 bzw. 67 gebildet. Diese Finger 66 bzw. 67 greifen in jeweils drei Führungsschlitze 68 bzw. 69 der Schieber 23 bzw. 24 ein. Hierdurch ist ein Verkanten der Klemmbacken 3, 4 gegenüber den Mitnehmern 19, 20 wirksam verhindert. Die Führungsschlitze 68 bzw. 69 sind jeweils parallel zu einander ausgerichtet. Bei Bedarf können auch in allen Führungsschlitzen 68, 69 Druckfedern angeordnet sein.

Ein Lösen des Mobiltelefons 33 aus der in den Figuren 10 bis 12 dargestellten Klemmposition B erfolgt durch ein kurzes Niederdrücken der Oberschale 6 bzw. des Mobiltelefons 33 gegen die Unterschale 7 im Bereich des Beschlags 17. Hierdurch gibt der Push-Push-Beschlag 17 die Oberschale 6 frei und die in Figur 1 beschriebenen Federelement bewirken ein Abheben der Oberschale 6 von der Unterschale 7. Beim Anheben erfolgt dann zunächst ein Entspannen der zwischen den Schiebern 23, 24 und den Mitnehmern 19, 20 wirkenden Druckfedern 60, 61. Anschließend schieben die Druckfedern 52a, 53a die Schieber 23, 24 bzw. mit diesen die Flügel 25, 26 in die in Figur 8 gezeigte Freigabestellung A, aus der das Mobiltelefon entnommen werden kann.

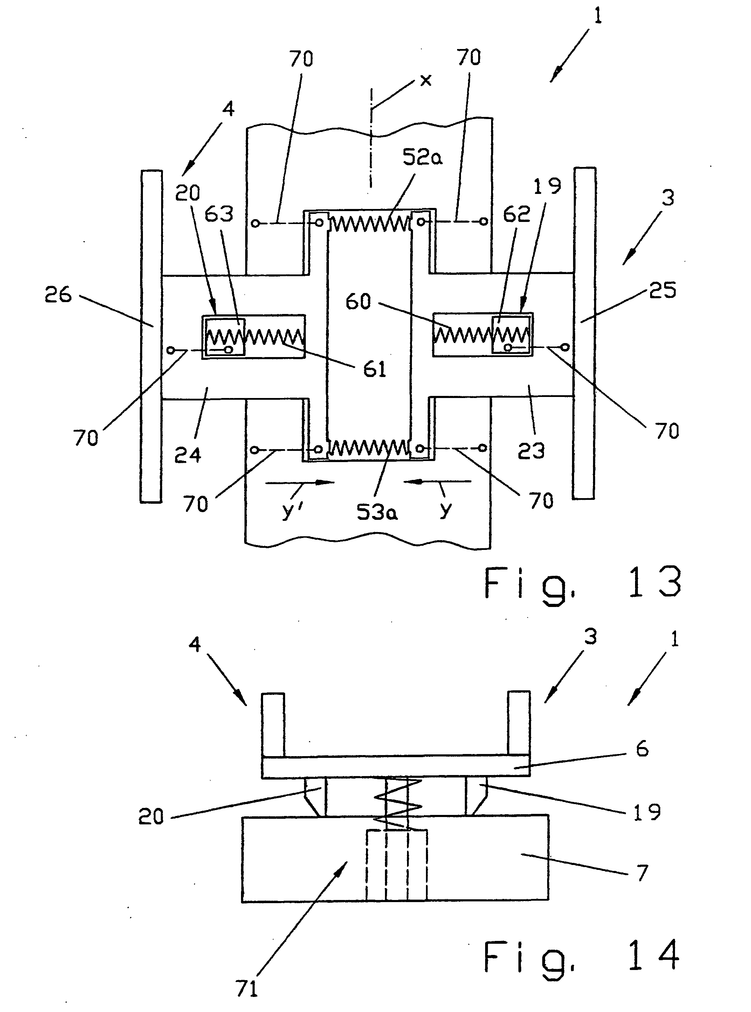

Figur 13 zeigt eine vereinfachte, idealisierte Darstellung der in den Figuren 1 bis 5 und 7 bis 12 dargestellten Mechanik in der Oberschale 6 der Halterung 1. Die Mechanik besteht im Wesentlichen aus den zu den Klemmbacken 3, 4 gehörenden Schiebern 23, 24 und den Köpfen 62, 63 der Mitnehmer 19, 20, welche mit diesen zusammenwirken. Durch die Anordnung von Druckfedern 52a, 53a, 60, 61 sind die Bewegungen der Bauteile 23, 62 bzw. 24, 63 in die Richtungen y bzw. y' gebremst. Durch ein Zusammenpressen der Druckfedern 60, 61 ist eine Entkopplung der Bewegung der Köpfe 62, 63 von der Bewegung der Schieber 23, 24 möglich. Das heißt, die Köpfe 62, 63 können sich weiter zu der Längsmittelachse x hin bewegen, obwohl die Bewegungsmöglichkeit der Schieber 23, 24 bzw. der mit diesen verbundenen Flügel 25, 26 durch ein Anliegen an einem Mobiltelefon (nicht dargestellt) behindert bzw. verhindert ist. Durch das weitere Zusammenfahren der Köpfe 62, 63 erfolgt dann eine Erhöhung der auf das Mobiltelefon wirkenden Klemmkräfte, da die Druckfedern 60, 61 stärker zusammengepresst werden und mit der erhöhten Kraft auf die Schieber 23, 24 drücken. Mit gestrichelten Linien ist in Figur 13 eine alternative Lösung angedeutet. Die gestrichelten Linien stellen Zugfedern 70 dar, welche die Druckfedern 52a, 53a, 60, 61 ersetzen. Gemäß einer nicht dargestellten Ausführungsvariante ist eine Halterung vorgesehen, welche eine feststehende Klemmbacke und eine bewegliche Klemmbacke aufweist, die mit einem Mitnehmer zusammenwirkt. Bei einer Mechanik für eine derartige Ausführungsvariante würden dann die in Figur 13 dargestellten Druckfedern 52a, 53a zu einer Seite an einer Wand abgestützt sein.

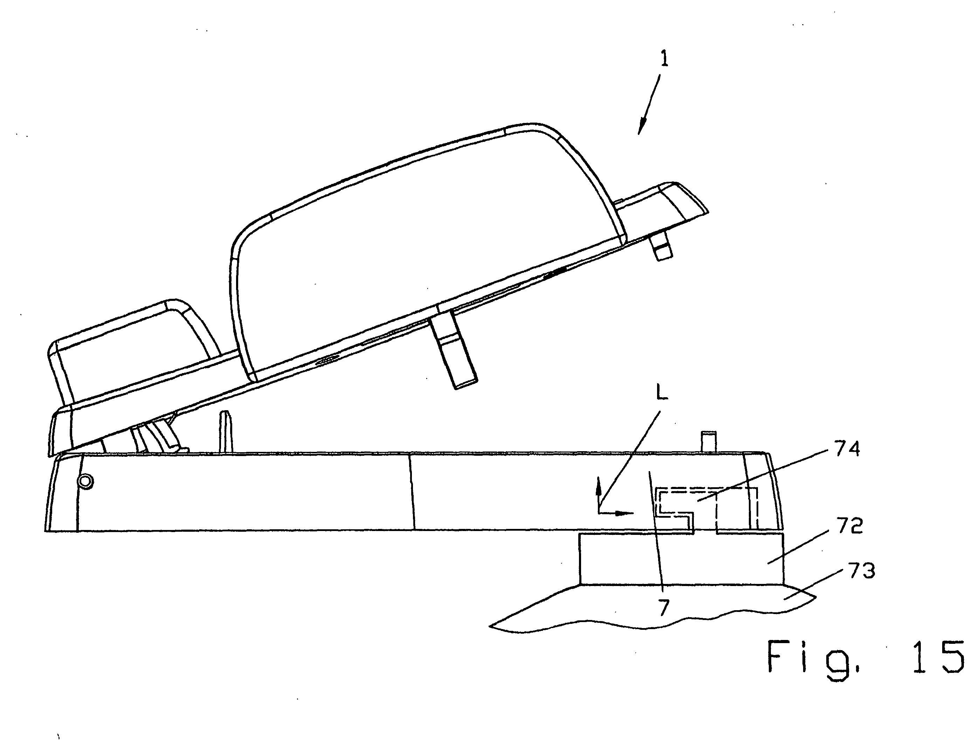

In Figur 14 ist eine Variante zu der in den Figuren 1 bis 5 und 7 bis 13 dargestellten Ausführung abgebildet. Hierbei ist eine Halterung 1 vorgesehen, welche im Wesentlichen aus einer Oberschale 6 und einer Unterschale 7 besteht. Die Oberschale 6 kann über einen Hubmechanismus 71 parallel von der Unterschale 7 angehoben werden. Analog zu der oben beschriebenen Lösung tauchen Mitnehmer 19, 20 in die Unterschale 7 und bewirken indirekt eine Bewegung der Klemmbacken 3, 4. Hierdurch ist ein Klemmen eines Mobiltelefons durch eine Hubbewegung anstatt durch eine Schwenk- bzw. Kippbewegung realisiert.

Figur 15 zeigt die in Figur 1 dargestellte Halterung 1 mit einer der Unterschale 7 zugeordneten Auflage 72, welche an einem Armaturenbrett 73 eines nicht näher dargestellten Fahrzeugs befestigt ist. Die Auflage 72 besitzt eine Nase 74, welche in die Unterschale 7 eintaucht. Die Unterschale 7 ist mittels einer L-förmigen Bewegung L auf die Auflage 72 aufschiebbar und von der Auflage 72 abziehbar. Neben einer mechanischen Halterung der Unterschale 7 beziehungsweise der Halterung 1 ist auch eine elektrische Kontaktierung zwischen der Unterschale 7 und der Auflage 72 vorgesehen.

Die Erfindung ist nicht auf dargestellte und beschriebene Ausführungsbeispiele beschränkt. Sie umfasst vielmehr Weiterbildungen der Erfindung im Rahmen der Schutzrechtsansprüche. Insbesondere sieht die Erfindung auch vor, elektronische Geräte, wie einen Personal Digital Assistent, einen MP3-Player oder eine Digitalkamera in der vorgeschlagenen Art und Weise zu halten.

Weiterhin ist es in einer nicht dargestellten einfachen Ausführungsvariante vorgesehen, den Mitnehmer bzw. die Finger des Kopfes des Mitnehmers direkt mit dem Schieber zusammenwirken zu lassen, ohne eine Druckfeder oder ein vergleichbares Bauteil zwischen Finger und Schieber zu schalten. Eine derartige Halterung ist dafür geeignet verschiedene Mobiltelefone annähernd gleicher Breite zu halten, wobei kleine Abweichungen in der Breite durch die Polsterung der Flügel der Klemmbacken ausgleichbar sind.

Die Erfindung auch Halterungen vor, welche mehr als zwei Klemmbacken aufweisen. So ist es beispielsweise vorgesehen, ein elektronisches Gerät von vier Seiten her zu Klemmen. Die hierfür erforderliche Mechanik liegt dann beispielsweise in zwei Ebenen einer Oberschale.

### Bezugszeichenliste:

- 1: Halterung
- 2: Gehäuse
- 3: Klemmbacke
- 4: Klemmbacke
- 5: Steckerhalter
- 6: Oberschale von 1
- 7: Unterschale von 1
- 8: Drehachse in 7
- 9: Arm
- 10: Blattfeder
- 11: Unterseite von 6
- 12: Arm
- 13: Zahn
- 14: Nase
- 15: Rastnase
- 16: Fixierung
- 17: Beschlag bestehend aus 14, 15, 16
- 18: Oberseite von 6
- 19: Mitnehmer
- 20: Mitnehmer
- 21: Ausnehmung in 7 für 19
- 22: Ausnehmung in 7 für 20
- 23: Schieber
- 24: Schieber
- 25: Flügel
- 26: Flügel
- 27: Rinne
- 28: Innenseite von 25
- 29: Innenseite von 26
- 30: Polsterung
- 31: Einbauschacht
- 32: Verschraubung
- 33: Mobiltelefon
- 34: Display
- 35: Tastaturfeld
- 36: Antenne
- 37: Schnittstelle
- 38: Vorderseite
- 39: Rückseite
- 40 bis 43: Seitenfläche
- 44: Steg
- 45: Oberseite von 7
- 46: Durchbrechung in 6
- 47: Blende
- 48: Spitze von 19
- 49: Spitze von 20
- 50: Gleitschräge von 19
- 50a: Kante an 21
- 51: Gleitschräge von 20
- 51a: Kante and 22
- 52: Federelement
- 52a: Druckfeder
- 53: Federelement
- 53a: Druckfeder
- 54 bis 57: Nase
- 58: Übertragungselement
- 59: Übertragungselement
- 60: Druckfeder
- 61: Druckfeder
- 62: Kopf von 19
- 63: Kopf von 20
- 64: Anlagefläche an 23
- 65: Anlagefläche an 24
- 66: Finger von 62
- 67: Finger von 63
- 68: Führungsschlitz in 23
- 69: Führungsschlitz in 24
- 70: Zugfeder
- 71: Hubmechanismus
- 72: Auflage
- 73: Armaturenbrett
- 74: Nase

## Patentansprüche

1. Halterung (1) zur vorübergehenden Befestigung eines elektronischen Gerätes, insbesondere eines Mobiltelefons (33), mit wenigstens zwei seitlich dem elektronischen Gerät zugeordneten Klemmbacken (3, 4, 25, 26), welche dieses zwischen sich einklemmen, wobei wenigstens eine der Klemmbacken (3, 4, 25, 26) an einer Oberschale (6) der Halterung (1) gelagert ist, welche schwenkbar oder distanzierbar mit einer Unterschale (7) der Halterung (1) verbunden ist, wobei die Bewegung der Klemmbacke (3, 4, 25, 26) über wenigstens einen in der Oberschale (6) gelagerten Mitnehmer (19, 20) bewirkt ist, welcher während der Schwenkbewegung oder der Distanzierbewegung wenigstens zeitweise in der Unterschale (7) der Halterung (1) geführt ist, und wobei die Klemmbacke (3, 4, 25 , 26) in der Oberschale (6) geführt ist und mit dem Mitnehmer (19, 20) gekuppelt ist, **dadurch gekennzeichnet, dass** zwischen dem Mitnehmer (19, 20, 62, 63) und der Klemmbacke (3, 4, 25 , 26) ein Übertragungselement (58, 59), insbesondere eine Feder (60, 61) oder ein Gummi, angeordnet ist, wobei eine kraftabhängige, bedingte Mitnahme der Klemmbacke (3, 4, 25 , 26) durch den Mitnehmer (19, 20, 62, 63) aus einer Freigabeposition (A) in eine Klemmposition (B) der Klemmbacke (3, 4, 25, 26) erfolgt.

2. Halterung nach einem der vorhergehenden Ansprüche, **dadurch gekennzeichnet, dass** die Klemmbacke (3, 4, 25 , 26) durch Federelemente (52, 53) in die Freigabeposition (A) gedrängt sind.

3. Halterung nach einem der vorhergehenden Ansprüche, **dadurch gekennzeichnet, dass** das Federelement (52, 53) insbesondere als Feder (52a, 53a) oder Gummi ausgebildet ist.

4. Halterung nach einem der vorhergehenden Ansprüche, **dadurch gekennzeichnet, dass** das Federelement (52, 53) zwischen gegenüberliegenden Klemmbacken (3, 4, 25 , 26) angeordnet ist.

5. Halterung nach einem der vorhergehenden Ansprüche, **dadurch gekennzeichnet, dass** das Übertragungselement (58, 59) stärker ausgelegt ist als das Federelement (52, 53).

6. Halterung nach einem der vorhergehenden Ansprüche, **dadurch gekennzeichnet, dass** der Mitnehmer (19, 20) mit wenigstens einem Finger (66, 67) in wenigstens einen Führungsschlitz (68, 69) des Schiebers (23, 24) eingreift.

7. Halterung nach einem der vorhergehenden Ansprüche, **dadurch gekennzeichnet, dass** die Oberschale (6) und die Unterschale (7) durch einen durch eine Druckbewegung verriegelbaren und durch eine Druckbewegung entriegelbaren Beschlag, insbesondere einen sogenannten Push-Push-Beschlag (17), verbindbar ist.

8. Halterung nach einem der vorhergehenden Ansprüche, **dadurch gekennzeichnet, dass** die Unterschale (7) der Halterung (1) einer Auflage (72) zugeordnet ist, wobei zwischen der Unterschale (7) und der Auflage (72) eine lösbare, formschlüssige Verbindung besteht, welche insbesondere auch als elektrische Schnittstelle ausgebildet ist.

9. Halterung nach Anspruch 8, **dadurch gekennzeichnet, dass** die Kupplung und Entkupplung zwischen der Unterschale (7) und der Auflage (72) durch eine L-förmige Bewegung erfolgt.

10. Halterung nach wenigstens einem der Ansprüche 9 oder 10, **dadurch gekennzeichnet, dass** die Unterschale (7) ausschließlich an der Auflage (72) befestigt ist, wobei diese vorzugsweise an einem Armaturenbrett (73) eines Fahrzeugs befestigt ist.

## Claims

1. A holder (1) for temporarily fixing an electronic device, in particular a mobile telephone (33), having at least two clamping jaws (3, 4, 25, 26) associated laterally with the electronic device, which clamp said device between them, wherein at least one of the clamping jaws (3, 4, 25, 26) is mounted on an upper shell (6) of the holder (1), which is connected pivotably or distanceably to a lower shell (7) of the holder (1), wherein the movement of the clamping jaw (3, 4, 25, 26) is effected by at least one carrier (19, 20) which is mounted in the upper shell (6) and during,the swivel movement or the distancing movement is guided at least temporarily in the lower shell (7) of the holder (1), and wherein the clamping jaw (3, 4, 25, 26) is guided in the upper shell (6) and is coupled with the carrier (19, 20),
**characterised in that** between the carrier (19, 20, 62, 63) and the clamping jaw (3, 4, 25, 26) is disposed a transmission element (58, 59), in particular a spring (60, 61) or a rubber, with a force-dependent, conditional entrainment of the clamping jaw (3, 4, 25, 26) by the carrier (19, 20, 62, 63) from a release position (A) into a clamping position (B) of the clamping jaw (3, 4, 25, 26) taking place.

2. A holder according to one of the preceding Claims,
**characterised in that** the clamping jaw (3, 4, 25, 26) is urged by spring elements (52, 53) into the release position (A).

3. A holder according to one of the preceding Claims,
**characterised in that** the spring element (52, 53) is constructed in particular as a spring (52a, 53a) or rubber.

4. A holder according to one of the preceding Claims,
**characterised in that** the spring element (52, 53) is disposed between opposite clamping jaws (3, 4, 25, 26).

5. A holder according to one of the preceding Claims,
**characterised in that** the transmission element (58, 59) has a stronger construction than the spring element (52, 53).

6. A holder according to one of the preceding Claims,
**characterised in that** the carrier (19, 20) engages by at least one finger (66, 67) in at least one guide slot (68, 69) of the slide (23, 24).

7. A holder according to one of the preceding Claims,
**characterised in that** the upper shell (6) and the lower shell (7) can be connected by a fitting that can be locked by a pushing movement and can be unlocked by a pushing movement, in particular a so-called push-push fitting (17).

8. A holder according to one of the preceding Claims,
**characterised in that** the lower shell (7) of the holder (1) is associated with a support (72), with a releasable, positive connection, which is constructed in particular as an electric interface, being provided between the lower shell (7) and the support (72).

9. A holder according to Claim 8,
**characterised in that** the coupling and uncoupling between the lower shell (7) and the support (72) takes place by an L-shaped movement.

10. A holder according to at least one of Claims 9 or 10,
**characterised in that** the lower shell (7) is fixed exclusively to the support (72), with said support preferably being fixed to a dashboard (73) of a vehicle.

## Revendications

1. Support (1) pour fixer provisoirement un appareil électronique, en particulier un téléphone mobile (33), comprenant au moins deux mâchoires de serrage (3, 4, 25, 26) agencées de chaque côté de l'appareil électronique, lesquelles mâchoires enferment entre elles l'appareil, l'une des mâchoires de serrage au moins (3, 4, 25, 26) étant montée sur une coquille supérieure (6) du support (1), laquelle est reliée à une coquille inférieure (7) du support (1) de façon à pouvoir pivoter ou s'écarter, le mouvement de la mâchoire de serrage (3, 4, 25, 36) étant obtenu par l'intermédiaire d'au moins un tenon d'entraînement (19, 20) logé dans la coquille supérieure (6), lequel est amené au moins temporairement dans la coquille inférieure (7) du support (1) pendant le mouvement de pivotement ou d'écartement et la mâchoire de serrage (3, 4, 25, 26) étant amenée dans la coquille supérieure (6) et accouplée avec le tenon (19, 20),
**caractérisé en ce qu'**un organe de transmission (58, 59), en particulier un ressort (60, 61) ou un caoutchouc, est agencé entre le tenon (19, 20, 62, 63) et la mâchoire de serrage (3, 4, 25, 26), un verrouillage de la mâchoire de serrage (3, 4, 25, 26) conditionné et dépendant de la puissance se produisant par l'intermédiaire du tenon (19, 20, 62, 63) depuis une position de déverrouillage (A) dans une position de blocage (B) de la mâchoire de serrage (3, 4, 25, 26).

2. Support selon l'une des revendications précédentes,
**caractérisé en ce que** la mâchoire de serrage (3, 4, 25, 26) est poussée dans la position de déverrouillage (A) par l'intermédiaire d'éléments élastiques (52, 53).

3. Support selon l'une des revendications précédentes,
**caractérisé en ce que** l'élément élastique (52, 53) est réalisé en particulier sous la forme d'un ressort (52a, 53a) ou d'un caoutchouc.

4. Support selon l'une des revendications précédentes,
**caractérisé en ce que** l'élément élastique (52, 53) est agencé entre les mâchoires de serrage (3, 4, 25, 26) en regard.

5. Support selon l'une des revendications précédentes,
**caractérisé en ce que** l'organe de transmission (58, 59) est plus solide que l'élément élastique (52, 53).

6. Support selon l'une des revendications précédentes,
**caractérisé en ce que** le tenon (19, 20) s'engage dans au moins une fente de guidage (68, 69) du coulisseau (23, 24) avec au moins un doigt (66, 67).

7. Support selon l'une des revendications précédentes,
**caractérisé en ce que** la coquille supérieure (6) et la coquille inférieure (7) peuvent être reliées par l'intermédiaire d'une armature pouvant être verrouillée par un mouvement de pression et déverrouillée par un mouvement de pression, en particulier ce qu'on appelle une armature push-push (17).

8. Support selon l'une des revendications précédentes,
**caractérisé en ce que** la coquille inférieure (7) du support (1) est associée à un appui (72), une liaison par correspondance de forme amovible s'établissant entre la coquille inférieure (7) et l'appui (72), laquelle est en particulier également réalisée sous forme d'interface électrique.

9. Support selon la revendication 8,
**caractérisé en ce que** l'accouplement et le désaccouplement entre la coquille inférieure (7) et l'appui (72) ont lieu par un mouvement en forme de L.

10. Support selon au moins l'une des revendications 9 ou 10,
**caractérisé en ce que** la coquille inférieure (7) est fixée exclusivement sur l'appui (72), celui-ci étant de préférence fixé sur un tableau de bord (73) d'un véhicule.
